# EUROPEAN PATENT SPECIFICATION

(11) **EP 3 095 545 B1**
(45) Date of publication and mention of the grant of the patent: **28.08.2019**
(21) Application number: 14877832.7
(22) Date of filing: 01.12.2014
(51) Int. Cl.: B23K 9/167, B23K 9/32, B23K 37/04

(54) **TIG WELDING DEVICE AND TIG WELDING METHOD**
WIG-SCHWEISSVORRICHTUNG UND WIG-SCHWEISSVERFAHREN
DISPOSITIF DE SOUDAGE TIG ET PROCÉDÉ DE SOUDAGE TIG

(30) Priority: 09.01.2014 JP 2014002102
(43) Date of publication of application: 23.11.2016
(73) Proprietor: Amada Miyachi Co., Ltd., Kanagawa 259-1196 (JP)
(72) Inventor: HAGISAWA, Yoichi, Noda-shi Chiba 278-0016 (JP)
(74) Representative: Regimbeau
(86) International application number: PCT/JP2014/005986
(87) International publication number: WO 2015/104746

(56) References cited:
- JP-A- 2000 176 641
- JP-A- 2005 088 032
- JP-A- 2010 082 674
- US-A- 3 119 010

## Description

### TECHNICAL FIELD

The present invention relates to a TIG welding device and TIG welding method for welding mutually abutted two members together while keeping those members held by a clamp.

### BACKGROUND ART

An electric circuit is made up by interconnecting, via wiring lines, electric components/parts and the like that fulfill specific functions with use of electricity-supplying-source power supply as well as electricity, where line interconnecting or wiring work is necessarily involved in electric circuit construction. Generally, welding between discrete terminal members is carried out commonly with use of arc welding process that utilizes an electricity discharge phenomenon (arc discharge). Particularly for welding of terminal members that constitute electric circuits, TIG welding process with use of a nonconsumable torch electrode (tungsten electrode rod) is used more often.

Conventionally, as is a common practice with a TIG welding device to be mounted on an automatic working machine such as robots, while a torch electrode serving as one electrode and a fixing jig such as a clamp (referred to also as 'chuck') serving as the other electrode are attached to an identical or common forward end portion of the robot arm, a welding-target portion of two terminal members (base materials) is nipped by the clamp and then the forward end of the torch electrode is made to approach the welding-target portion, under which condition a voltage is applied to between the two electrodes (between the torch electrode and the clamp) to generate an arc between the torch electrode and the welding-target portion, thus the welding-target portion being fused with heat of the arc.

In this case, since the torch electrode and the clamp are held at all times in a constant positional relation therebetween on the robot arm, the clamp nipping position and the torch electrode approach position (arc discharge position) relative to a multiplicity of workpieces or welding-target portions can be controlled so as to be maintained constant (see, e.g., PTL 1).

### CITATION LIST

### Patent Literature

PTL 1: Japanese Patent Laid-open Publication JP 2010-82674

### SUMMARY OF INVENTION

### Technical Problem

However, with a conventional TIG welding device in which the torch electrode and the clamp are maintained at all times at a constant positional relation as described above, there is difficulty in stably and securely generating an arc between the torch electrode and the welding-target portion. In some cases an arc is generated between the torch electrode and the clamp to fuse or burn the clamp.

Such undesirable flying sparks of an arc can be avoided to a certain extent by placing the clamp at a position sufficiently far from the torch electrode. However, under the condition that the position where the welding-target portion nipped by the clamp is set farther from the torch electrode, contact closeness at around the forward end of the welding-target portion can no longer be ensured, i.e., the function of the clamp is weakened. As a result, desired arc welding quality can no longer be obtained.

The present invention, having been accomplished in view of these and other problems of the prior art, provides a TIG welding device and TIG welding method capable of achieving a high-quality, stable arc welding which is to be executed with mutually abutted two members (base materials) held by a clamp.

### Solution to Problem

According to the present invention, there is provided the TIG welding device and the TIG welding method as defined in the appended claims.

The application also discloses a TIG welding device according to claim 1.

The present application also discloses a TIG welding method according to claim 10.

In this invention, while a pressurizing force for close contact and fixation is being applied to the welding-target portion of the two terminal members (base materials) and while the forward end of the torch electrode is kept in contact with the welding-target portion, current supply is started and thereafter the torch electrode is separated to generate an arc discharge. Therefore, the arc can be concentrated securely onto the welding-target portion and moreover the clamp electrode can be set as close to the torch electrode as possible, so that a desired welding quality can be obtained stably and securely.

As one preferred aspect of the invention, the clamp electrode includes a clamp for nipping and fixing the first and second members by electromagnetic force or air pressure or hydraulic pressure in proximity to a site of the welding-target portion facing the torch electrode.

The linear drive member is linearly moved between a first position for positioning the clamp electrode and the torch electrode farther from the welding-target portion, a second position for positioning the clamp electrode at its working position, a third position for bringing the forward end of the torch electrode into contact with the welding-target portion, and a fourth position for separating the forward end of the torch electrode from the welding-target portion by a specified distance suitable for generation of the arc. With this constitution, the torch electrode and the fixing jig can be moved efficiently in linkage relative to the welding-target portion of the base materials by the uniaxial linear drive mechanism.

### Advantageous Effects of Invention

According to the TIG welding device or the TIG welding method of the invention, with the above-described constitution, arc welding to be executed with two members (base materials) held by a clamp can be fulfilled with high quality and stability.

### BRIEF DESCRIPTION OF DRAWINGS

Fig. 1 is a view showing an overall configuration of a TIG welding device according to one embodiment of the present invention;
Fig. 2 is a perspective view showing forms of base materials and a welding-target portion and main part of the clamp in the embodiment;
Fig. 3 is a flowchart showing a procedure of TIG welding in the embodiment;
Fig. 4A is a view showing one step of a raising/lowering operation in the TIG welding device;
Fig. 4B is a view showing one step of the raising/lowering operation in the TIG welding device;
Fig. 4C is a view showing one step of the raising/lowering operation in the TIG welding device;
Fig. 4D is a view showing one step of the raising/lowering operation in the TIG welding device;
Fig. 4E is a view showing one step of the raising/lowering operation in the TIG welding device;
Fig. 4F is a view showing one step of the raising/lowering operation in the TIG welding device;
Fig. 5A is a view showing one step of a clamping operation and a conducting operation in the TIG welding device;
Fig. 5B is a view showing one step of the clamping operation and the conducting operation in the TIG welding device;
Fig. 5C is a view showing one step of the clamping operation and the conducting operation in the TIG welding device;
Fig. 5D is a view showing one step of the clamping operation and the conducting operation in the TIG welding device;
Fig. 5E is a view showing one step of the clamping operation and the conducting operation in the TIG welding device;
Fig. 6 is a view showing a technique for generating an arc discharge with the clamp working position (nipping position) set far apart from the torch electrode in a conventional TIG welding device;
Fig. 7 is a view showing a modification of a linear drive member-related part in the embodiment; and
Fig. 8 is a view showing another modification of the linear drive member-related part in the embodiment.

### DESCRIPTION OF EMBODIMENTS

Hereinbelow, a preferred embodiment of the invention will be described with reference to the accompanying drawings.

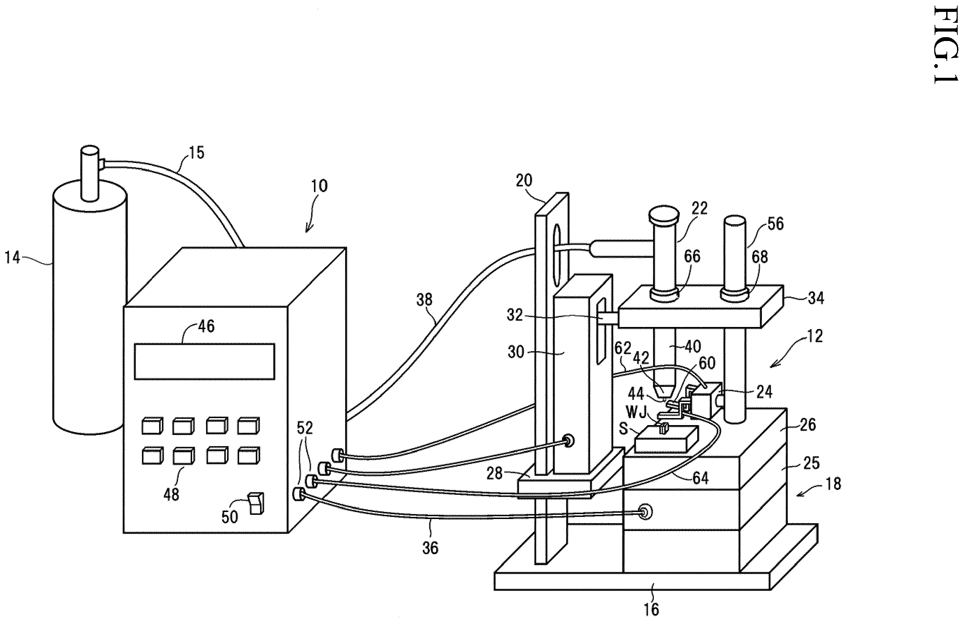

Fig. 1 shows an overall configuration of a TIG welding device according to one embodiment of the invention. This TIG welding device has a stationary-type device configuration preferably compatible with meet-palms like welding (butt welding), in particular. The TIG welding device includes: a unit-type device main body 10 containing a DC-type welding power supply circuit, a control circuit and various drive circuits and the like; a welding head 12 for performing TIG welding on welding-target materials (base materials) on an electric-component support (e.g., assemble or circuit board) S under exertive-power supply and control from the device main body 10; and a gas cylinder 14 which is a supply source of shield gas such as argon gas.

The welding head 12 is so constructed that a movable stage 18 and a torch stand 20 are combinationally provided on a plate-shaped base 16 while a torch 22 and a clamp electrode 24 for TIG welding are mounted on the torch stand 20 so as to be up/down movable.

More specifically, the movable stage 18 includes an X-Y stage 25 for moving the electric-component support S in an X-Y direction within a horizontal plane, and a θ stage 26 for moving the electric-component support S in an azimuthal direction (θ direction) within a horizontal plane. In the torch stand 20, for example, a raising/lowering tower 30 containing a raising/lowering drive unit (not shown) using a servo motor as a drive source is provided on a stationary base 28. A linear drive member 34 is connected to the raising/lowering drive unit of the raising/lowering tower 30 via a raising/lowering support shaft 32. The torch 22 and the clamp electrode 24 are attached to the linear drive member 34 so as to be movable, and detachable therefrom, in the vertical direction. A mechanism for coupling the linear drive member 34 to the torch 22 and the clamp electrode 24 will be described in detail later.

The torch 22 is fixed in horizontal directions. Based on moving operation of the X-Y stage 25 in the X-Y direction and moving (rotating) operation of the θ stage 26 in the θ direction, which are both performed under control signals transmitted from the device main body 10 via a cable 36, a welding-target portion WJ of a material to be welded, which is targeted for TIG welding, can be positioned just under the torch 22 on the electric-component support S mounted on the stage 18.

The torch 22 is designed to receive electric power for use of TIG welding and shield gas SG supplied from the device main body 10 via a hose 38 containing a torch cable. The torch 22 includes a cylindrical-shaped torch body 40 made from an insulator, e.g. resin, and a cylindrical- or conical-shaped torch nozzle 42 attached at a forward end (lower end) of the torch body 40. Further, a pencil-shaped torch electrode (tungsten electrode rod) 44 is removably set in the torch body 40 and the torch nozzle 42, with a forward end of the torch electrode 44 projected slightly (normally by 2 to 3 mm) from a lower end of the torch nozzle 42.

In the device main body 10, a display 46, operation buttons 48, a power switch 50 and the like are provided on a unit front face in touch panel fashion, while external connection terminals or connectors 52 are provided on a unit side face or rear face. The shield gas SG fed out to a hose 15 from the gas cylinder 14 is supplied to the torch 22 via the device main body 10 and the hose 38.

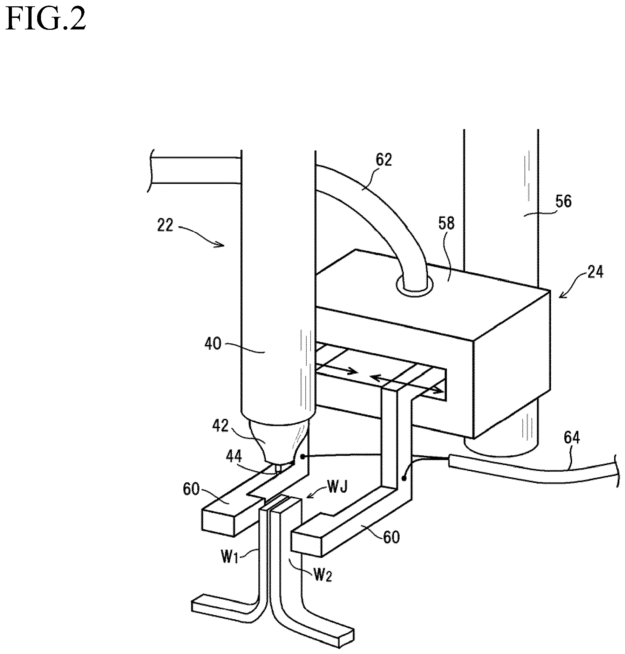

Fig. 2 shows an example of welding-target material (base materials) in this embodiment. In the example of the figure, base materials (welding-target materials) are two rod- or plate-shaped terminal members W₁, W₂ formed from copper or copper alloy as an example. The two terminal members W₁, W₂ have their upper end surfaces (top surfaces) generally flush with each other, so that the upper end portions are joined together integrally. Those integrally joined upper end portions of the terminal members W₁, W₂ form the welding-target portion WJ. The other ends (not shown) of the terminal members W₁, W₂ are led to, for example, electric components (not shown) mounted on the electric-component support S. Otherwise, one terminal member W₁, is mounted on the electric-component support S while the other end of the other terminal member W₂ is led to electric components (not shown) mounted on another electric-component support (not shown).

The clamp electrode 24, as shown in Figs. 1 and 2, includes: a clamp body 58 attached to a lower end portion of a raising/lowering rod 56 which is vertically movable integrally with and detachable from the linear drive member 34, the clamp body 58 containing or being equipped with a drive source (not shown) such as motor, plunger or cylinder; and a pair of openable/closable clamp arms 60 projecting and parallelly extending from the clamp body 58. The drive source in the clamp body 58 is supplied with required exertive power (electric power, compressed air or operating oil) from the device main body 10 via a cable or pipe 62 to generate a required nipping force or pressurizing force based on an electromagnetic force or air pressure or hydraulic pressure. The clamp arms 60 are coupled to the drive source so as to be enabled to nip and fix the welding-target portion WJ in a plate-thickness direction of the terminal members W₁, W₂. In order that the clamp arms 60 are enabled to nip and fix the welding-target portion WJ at an optimum height position, i.e., enabled to adjust the working position of the clamp electrode 24, there may be provided a mechanism (not shown) for adjusting the position of the clamp electrode 24 on the raising/lowering rod 56 or the position of a later-described coupling part 68.

The clamp arms 60, formed from a conductor such as brass, are electrically connected to a welding source within the device main body 10 via a ground cable 64. In this embodiment, the clamp arms 60 are electrically connected to a cathod of the welding source. To an anode of the welding source, the torch electrode 44 is electrically connected via the torch cable contained in the hose 38.

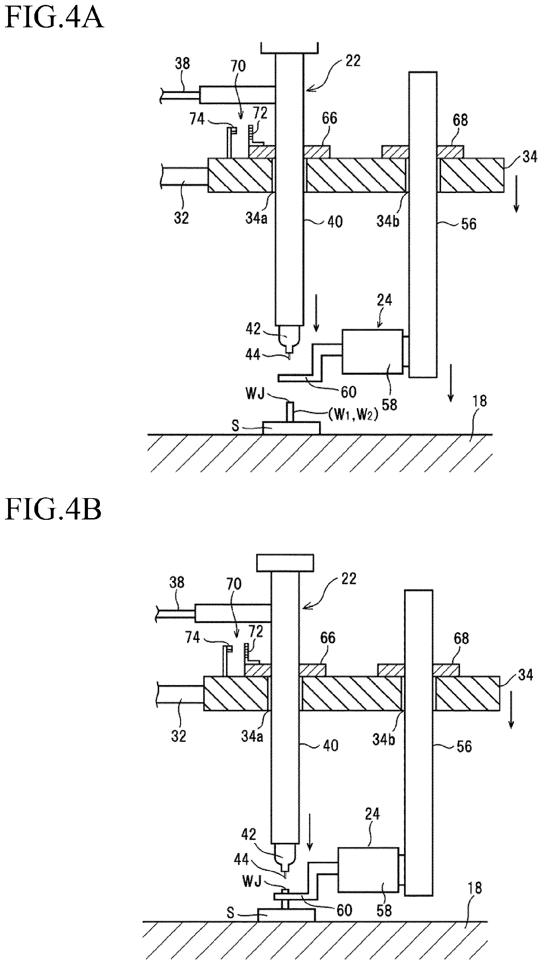

Next, in the TIG welding device of this embodiment, a mechanism for coupling the linear drive member 34 to the torch 22 and the clamp electrode 24 will be described with reference to Figs. 4A to 4F. As shown in the figures, the torch body 40 and the raising/lowering rod 56 are inserted into through holes 34a, 34b, respectively, of the plate-shaped linear drive member 34 so that collar- or flange-shaped coupling members 66, 68 fixed at upper portions or intermediate portions of the torch body 40 and the raising/lowering rod 56 are mounted on the upper surface of the linear drive member 34, by which the torch body 40 and the raising/lowering rod 56 are coupled to the linear drive member 34. The clamp electrode 24 is attached to the lower end portion of the raising/lowering rod 56 as described before.

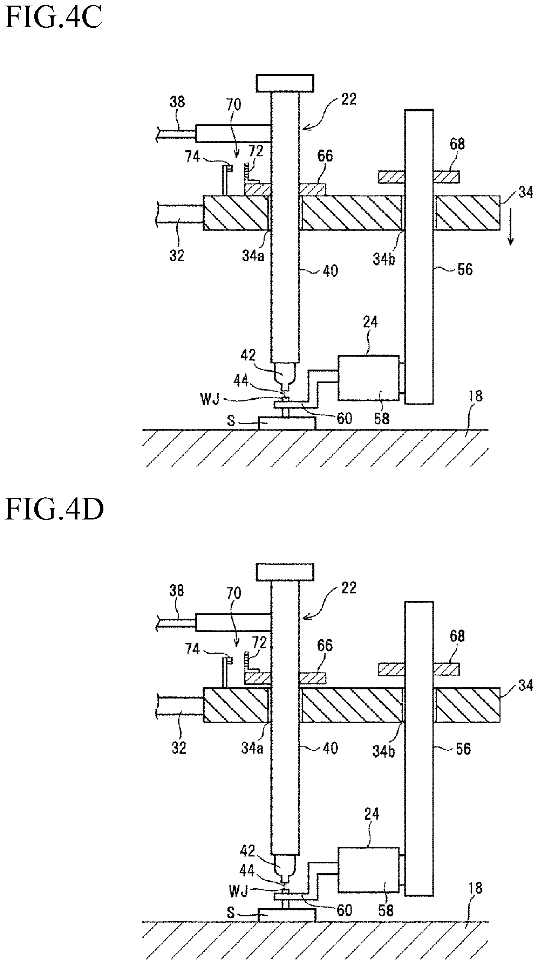

With the torch and clamp raising/lowering mechanism of the above-described configuration, while the lower end (forward end) of the torch electrode 44 and the lower end of the raising/lowering rod 56 each keep floating in the air (Fig. 4A), lowering of the linear drive member 34 by the raising/lowering tower 30 causes the torch 22 and the clamp electrode 24 to be moved down integrally with the linear drive member 34 with the coupling members 66, 68 mounted on the upper surface of the linear drive member 34. Then, upon arriving at the working position, the clamp electrode 24 immediately starts clamping operation, nipping the welding-target portion WJ of the base materials (W₁, W₂). As the linear drive member 34 further lowers, the coupling part 68 of the raising/lowering rod 56 is separated from the linear drive member 34 (Fig. 4C). Then, after the lower end of the torch electrode 44 has come into contact with the upper surface of the welding-target portion WJ of the base materials (W₁, W₂) (Fig. 4D), the coupling member 66 of the torch body 40 is separated from the linear drive member 34 and the torch body 40 is allowed to stand up on the welding-target portion WJ independently of the linear drive member 34 (Fig. 4D). In this case, the self weight of the torch 22 applies to the welding-target portion WJ.

In the configurational example of the figures, when the coupling member 68 of the raising/lowering rod 56 is separated from the linear drive member 34, self weights of the raising/lowering rod 56 and the clamp electrode 24 apply to the base materials (W₁, W₂). However, as will be described later, interposing a compression coil spring (86) between the coupling member 68 and the linear drive member 34 makes it possible to reduce the load applied to the base materials (W₁, W₂) as much as possible.

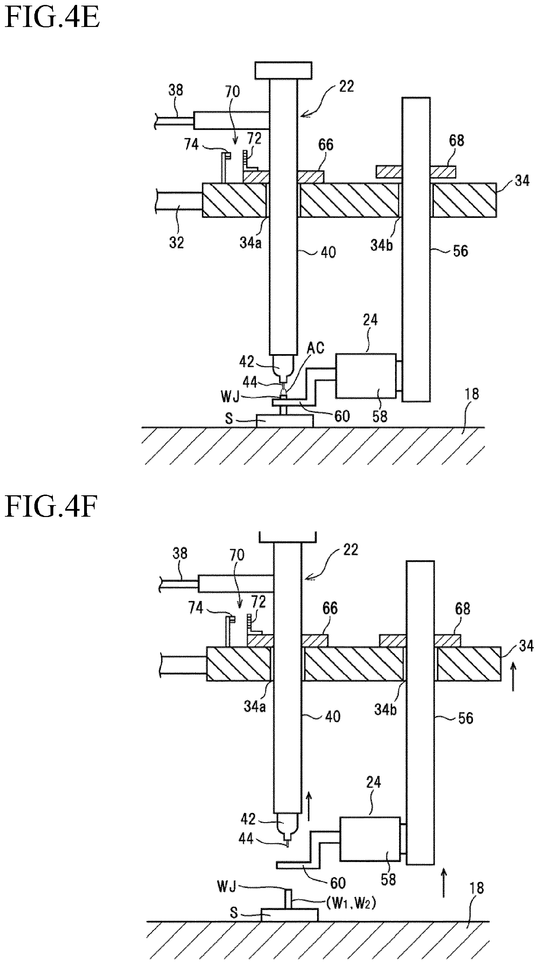

Also, in the state that the lower end of the torch electrode 44 is in contact with the welding-target portion WJ of the base materials (W₁, W₂) (Fig. 4E), moving up the linear drive member 34 to its original height position first causes the coupling member 66 of the torch body 40 to be mounted on the linear drive member 34 on the upward way so that the torch body 40 is also moved up integrally with the linear drive member 34. Further, the upward movement of the linear drive member 34 then causes the coupling member 68 of the raising/lowering rod 56 to be mounted on the linear drive member 34 so that the raising/lowering rod 56 and the clamp electrode 24 are also moved up integrally with the linear drive member 34 (Fig. 4F) .

In this embodiment, a sensor 70 for detecting the coupled or separated state between the coupling member 66 of the torch body 40 and the linear drive member 34 is provided. The sensor 70 shown in the figure is a vertical linear scale which includes a vertically extending scale part 72 attached on a side face of the flange 66, and a scale reading part 74 attached to the linear drive member 34 so as to allow the scale part 72 to be optically read at a level corresponding to a relative height position of the linear drive member 34. The scale reading part 74, which is a reflection-type optical sensor, is electrically connected to a control circuit in the device main body 10 via an electric cable (not shown).

In this sensor 70, as far as the coupling member 66 of the torch body 40 is mounted on the linear drive member 34, output signals (reading values) of the scale reading part 74 are maintained at constant values even though the linear drive member 34 is moved up and down at any arbitrary height positions. However, when the linear drive member 34 is separated from the coupling member 66 of the torch body 40, the relative position between the scale part 72 and the scale reading part 74 is changed, causing the output signal (reading value) of the scale reading part 74 to be changed. A control section in the device main body 10 is enabled to monitor the relative positional relationship between the linear drive member 34 and the torch body 40 based on an output signal from the scale reading part 74. Further, when the lower end of the torch electrode 44 is brought into contact with the welding-target portion WJ of the base materials (W₁, W₂) on the forward-movement (down-movement) way of the linear drive member 34, the control section can detect that contact. In addition, sensors of other methods such as proximity sensors are also usable instead of the optical sensor using such a scale.

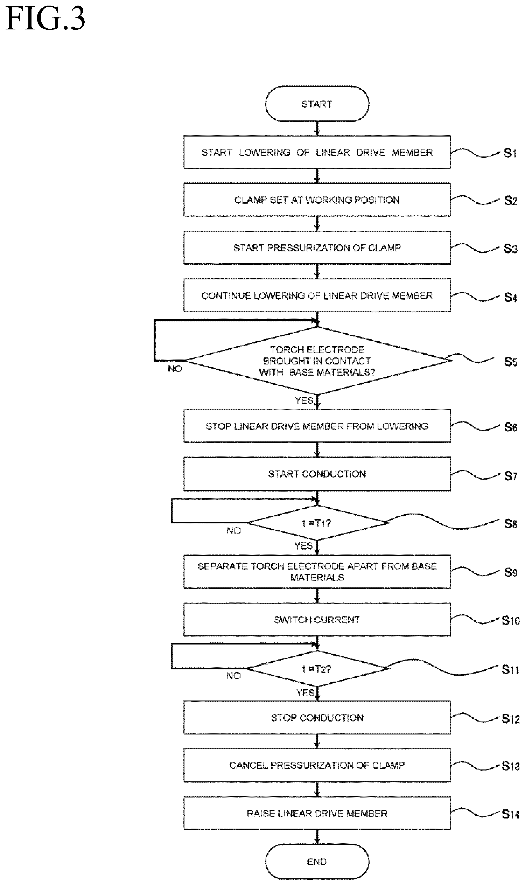

Next, operations of the TIG welding device as well as the TIG welding method in this embodiment will be described with reference to Fig. 3, Figs. 4A to 4F, and Figs. 5A to 5E.

First, in the state that the electric-component support S supporting the base materials (W₁, W₂) is mounted on the stage 18, the X-Y stage 25 and the θ stage 26 are aligned within a horizontal plane under the control by the control section in the device main body 10 as described above. As a result of this alignment motion, the welding-target portion WJ of the base materials (W₁, W₂) is positioned nearly just under the torch electrode 44. Normally, since X-Y coordinates are assigned to all of welding-target portions WJ that are targeted for welding on the electric-component support S, alignment operations of the open loop control is adoptable. However, positional operation of the feedback control with use of a monitor camera or the like may also be performed.

Independently of the alignment within the horizontal plane as described above, the start position of the torch 22 is adjusted by the raising/lowering tower 30 to a proper height position also in the heightwise direction under the control by the control section in the device main body 10. However, in cases where arc welding under the same conditions is performed in succession with a plurality of welding-target materials of one kind, the initial height-position adjustment for the next-time arc welding can be omitted by returning the torch 22 to the same start position as the preceding-time operation after an end of the arc welding.

In the state that the positional alignment or initial height-position adjustment as described above has been completed (Fig. 4A), TIG welding on the base materials (W₁, W₂) on the stage 18 is executed with the welding head 12 under the control by the control section in the device main body 10. The flowchart of Fig. 3 shows a procedure for the TIG welding method in this embodiment.

First, the control section actuates the 3raising/lowering drive unit of the raising/lowering tower 30 to start a down movement of the linear drive member 34 (step S₁). Since the lower end (forward end) of the torch electrode 44 and the lower end of the raising/lowering rod 56 are each floating in the air (Fig. 4A), a start of the downward movement of the linear drive member 34 causes the torch 22 and the clamp electrode 24 to be also moved downward integrally with the linear drive member 34 while the coupling members 66, 68 are mounted on the linear drive member 34.

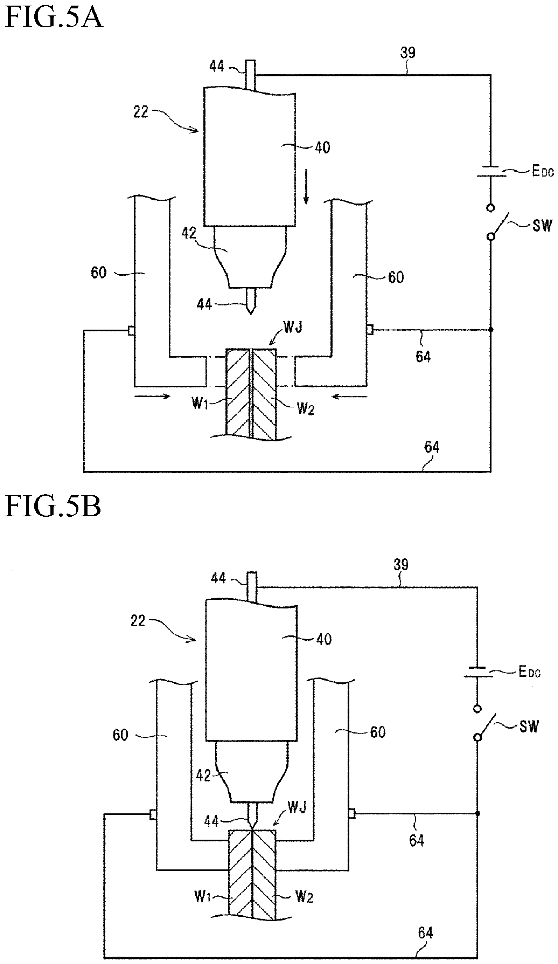

Soon after the start of the downward movement of the linear drive member 34, the clamp electrode 24 arrives at a preset position, i.e. working position, in the vertical direction (step S₂). In this working position, the clamp electrode 24 starts clamping operation (step S₃) to drive the clamp arms 60 in their closing directions, so that an upper end portion of the welding-target portion WJ of the base materials (W₁, W₂) is nipped (Fig. 5A). As a result of this clamping operation, the position of the welding-target portion WJ relative to the torch electrode 44 is corrected in the plate-thickness direction and moreover there is almost no clearance in the welding-target portion WJ, resulting in lowered contact resistance.

Meanwhile, the torch 22 is moved down integrally with the linear drive member 34 even after the end of the downward movement of the raising/lowering rod 56 (step S₄), causing the lower end (forward end) of the torch electrode 44 to gradually approach the welding-target portion WJ of the base materials (W₁, W₂). Then, upon contact of the lower end of the torch electrode 44 with the upper surface of the welding-target portion WJ (step S₅), the downward movement of the torch 22 is completed at this point (Fig. 4C). Immediately after that, the linear drive member 34 is separated from the coupling member 66 of the torch body 40 (Fig. 4D), and the control section stops the downward movement of the linear drive member 34 in response to an output signal of the sensor 70 (step S₆).

In addition, the control section starts the supply of the shield gas SG on the downward-movement way of the torch 22 or immediately after an end of the downward movement. The shield gas SG is supplied from the cylinder 14 via the device main body 10 and the hose 38 to the torch 22. The torch 22 introduces the shield gas SG to an upper portion of the torch body 40 and jets out the introduced shield gas SG through the opening of the torch nozzle 42.

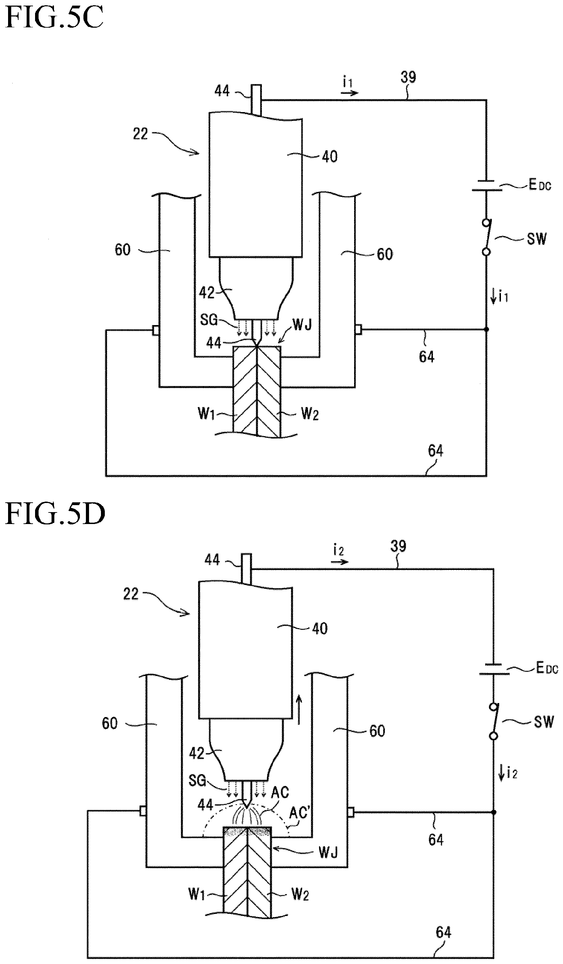

Under the condition that the forward end of the torch electrode 44 is in contact with the welding-target portion WJ of the base materials (W₁, W₂) as described above, the control section starts electrical current supply (step S₇). That is, a switch SW of the welding power supply circuit E_{DC}, within the device main body 10, is changed over from the then-selected OFF state to the ON state. Then, a DC voltage is applied from the welding power supply circuit E_{DC} to between the torch electrode 44 and the welding-target portion WJ. As a result, a DC current of current supply start, i.e., a start current i₁ flows along a sequential path (closed circuit) of cathode terminal of welding power supply circuit E_{DC} to ON-state switch SW to ground cable 64 to clamp arms 60 to welding-target portion WJ to torch electrode 44 to torch cable 39 in hose 38 to anode terminal of welding power supply circuit E_{DC} (Fig. 5C).

At this time point, since the forward end of the torch electrode 44 is in contact with the welding-target portion WJ of the base materials (W₁, W₂), an arc has not yet been generated regardless of the magnitude of the current i₁. However, in this embodiment, the current value of the start current i₁ is controlled to within a certain range by controlling the output voltage or output current of the welding power supply circuit E_{DC}. That is, to prolong the lifetime of the torch electrode 44, such a small current value (normally, 20A or less) is preferable that there is only a weak discharge and the welding-target portion WJ is not melted when the forward end of the torch electrode 44 is separated from the welding-target portion WJ. Meanwhile, in order to stably and securely generate high-temperature arc discharge suitable for arc welding with the forward end of the torch electrode 44 separated from the welding-target portion WJ, there is a need for generating a considerable level of Joule heat corresponding to the welding-target portion WJ for the current supply of this stage (contact state). In this embodiment, the current value of the start current i₁ is controlled so as to be within a range of 10 to 20A from the above-described two-side viewpoints.

Thus, with the forward end of the torch electrode 44 in contact with the welding-target portion WJ of the base materials (W₁, W₂), an arc current i_{DC} flows at a specified current value I₁, by which a considerable level of Joule heat is generated at the torch electrode 44 (especially around its forward end) and the welding-target portion WJ.

After elapse of a specified time T₁ since the current supply start (step S₈), the control section moves up the linear drive member 34 to some extent so that the forward end of the torch electrode 44 is upwardly distanced from the welding-target portion WJ by a set separation distance (e.g., 1 mm) (step S₉) and stopped at the resulting height position. Then, simultaneously with the separation of the torch electrode 44 or after completion of the separation, the output voltage of the welding power supply circuit E_{DC} is raised by one level so that the current flowing in the closed circuit is changed over to a normal DC current or principal current i₂ for arc discharge, which is a current one-level higher than the preceding-stage start current i₁ (step S₁₀). The principal current i₂ is selected as such a current value (normally, 30A or more) that enough high-temperature arc to melt the welding-target portion WJ is generated.

While the principal current i₂ is flowing as described above, an arc AC is sustained between the torch electrode 44 (especially around its forward end) and the welding-target portion WJ, where the welding-target portion WJ is melted by heat of the arc AC (Fig. 5D). In addition, although the current value of the principal current i₂ may be held at a certain value at all times, yet it is also possible to use such current waveform control that the current value of the principal current i₂ is further increased stepwise or gradually on the way of process in order to accelerate the melting of the welding-target portion WJ, or conversely decreased down-slope current waveform control.

After elapse of a specified time T₂ (normally 2 to 3 sec.) since the current supply start (step S₁₁), the control section changes over the switch SW to the OFF state, stopping the current supply (step S₁₂). Immediately thereafter, the control section stops the shield gas SG as well. With the current supply stopped and with the principal current i₂ cut off, the arc is extinguished instantaneously. With the arc extinguished, most part of the welding-target portion WJ is immediately solidified by natural cooling in the air. In this way, the welding-target portion WJ of the base materials (W₁, W₂) are welded and joined integrally or into one seamless piece.

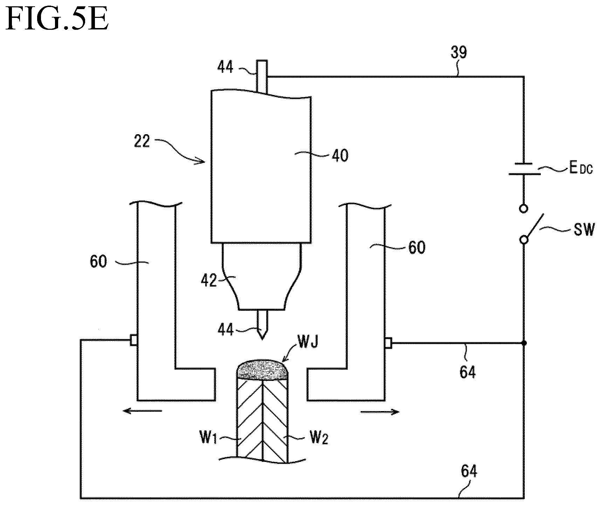

Thereafter, the control section makes the clamp electrode 24 moved back so as to cancel the pressurization or nipping-and-fixing of the welding-target portion WJ (step S₁₃, Fig. 5E). Next, the linear drive member 34 is raised through the raising/lowering drive unit of the raising/lowering tower 30, so that the torch 22 and the clamp electrode 24 are returned to the start position (step S₁₄).

As described above, in this embodiment, while the pressurizing force for close contact fixation is being applied to around the forward end of the welding-target portion WJ of the base materials (W₁, W₂) by the clamp electrode 24, the forward end of the torch electrode 44 that is in contact with the welding-target portion WJ is separated after the start of current supply, so that arc discharge is generated (touch start method or lift start method). Therefore, the arc AC can be concentrated stably and securely to the welding-target portion WJ (especially its central portion), allowing desired welding quality (bonding strength, appearance finish) to be obtained.

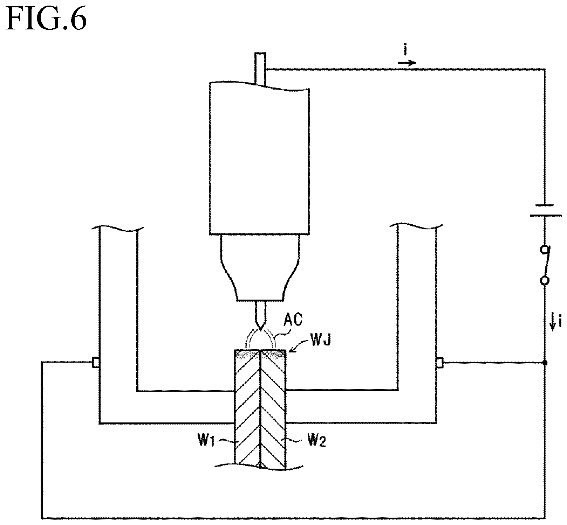

In this regard, conventional TIG welding devices of this type are incapable of adopting the touch start method because the torch electrode and the current supply are maintained normally in a constant positional relation. Therefore, with the forward end of the torch electrode set apart from the welding-target portion WJ from the beginning, current supply is started to generate the arc discharge. In this case, unfortunately, not only an expensive high-frequency power source or high-voltage DC power source is involved, but also it is quite difficult to generate the arc discharge so that the arc is definitely concentrated to the welding-target portion (especially around its central portion). On the cathode side, the arc may ignite at irregular positions and, in some cases, may fly to the clamp arms 60 as shown by imaginary line (one-dot chain line) AC' in Fig. 5D. For this reason, it has been the only countermeasure to set the working position of the clamp (nipping-and-fixing portion) to a position far enough from the torch electrode as shown in Fig. 6. However, setting the working position (nipping-and-fixing position) of the clamp far from the torch electrode as shown above would make it impossible to ensure the contact closeness around the forward end of the welding-target portion WJ, causing difficulty in stably and securely obtaining a desired arc welding quality. This embodiment has solved such problems of the prior art as described above.

In particular, the TIG welding device in this embodiment includes the linear drive member 34 coupled to the clamp electrode 24 and the torch body 40 and enabled to linearly move in parallel with the axial direction of the torch electrode 44, where the linear drive member 34 is configured to linearly move between four positions, i.e., a first position (Fig. 4A) for positioning the clamp electrode 24 and the torch body 40 upwardly far from the welding-target portion WJ of the base materials (W₁, W₂), a second position (Fig. 4B) for positioning the clamp electrode 24 at its working position, a third position (Fig. 4D) for bringing the forward end of the torch electrode 44 into contact with the welding-target portion WJ, and a fourth position (Fig. 4E) for separating the forward end of the torch electrode 44 by a specified distance suitable for generation of the arc. Therefore, the torch electrode and the clamp can be moved efficiently in linkage relative to the welding-target portion WJ by the uniaxial linear drive mechanism, thus efficiently solving the above-described problem of the prior art with low cost. Of course, neither a high-frequency power source nor a high-voltage DC power source, both being expensive, are involved so that the welding power supply circuit E_{DC} will do with a low-output inexpensive DC voltage source or DC current source.

### (Other embodiments or modifications)

Although the present invention has been fully described in conjunction with a preferred embodiment thereof hereinabove, the above-described embodiment should not be construed as limiting the invention. Those skilled in the art are allowed to make various changes and modifications in concrete embodiments of the invention without departing from the technical concept and technical scope of the invention as defined by the appended claims.

For example, in the above-described embodiment, the clamp electrode 24 starts to pressurize (nip and fix) the welding-target portion WJ before the forward end of the torch electrode 44 is brought into contact with the welding-target portion WJ of the base materials (W₁, W₂). In this case, after positional correction of the welding-target portion WJ is performed by the clamp electrode 24, the lower end of the torch electrode 44 is brought into contact with the welding-target portion WJ. Therefore, accurate control of the contact position can be fulfilled so that the forward end of the torch electrode 44 as an example can be accurately inserted into a gap between the base materials (W₁, W₂). In addition, as a modification example, the pressurization (nipping-and-fixing) of the welding-target portion WJ by the clamp electrode 24 may be started after the forward end of the torch electrode 44 has been brought into contact with the welding-target portion WJ of the base materials (W₁, W₂).

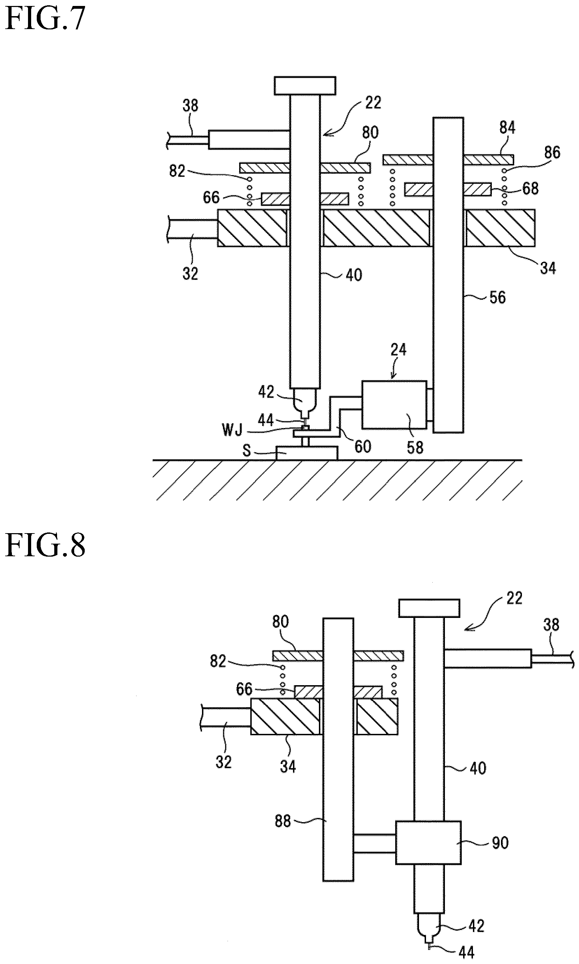

As another embodiment (modification), as shown in Fig. 7, a spring member, e.g. a coil spring 82, which is elastically deformable in the moving direction of the linear drive member 34 may be provided between the linear drive member 34 and a part of the torch body 40 (e.g., a flange-shaped spring receiving part 80 fixed in the torch body 40). In this case, by using a compression coil spring as the coil spring 82, the load applied to the welding-target portion WJ upon contact of the torch electrode 44 with the welding-target portion WJ can be made lighter than the self weight of the torch body 40 at discretion. This embodiment is advantageous when the base materials (W₁, W₂) are terminal members of small-size precision electronic components/parts. Otherwise, by using a tension coil spring as the coil spring 82, the load applied to the welding-target portion WJ upon contact of the torch electrode 44 with the welding-target portion WJ can be made heavier than the self weight of the torch body 40 at discretion. In addition, providing a mechanism (not shown) for adjusting the position of the spring receiving part 80 makes it possible to adjust the spring force of the coil spring 82.

Likewise, a spring member, e.g. a coil spring 86, which is elastically deformable in the moving direction of the linear drive member 34 may also be provided between the linear drive member 34 and a part of the raising/lowering rod 56 (e.g., a flange-shaped spring receiving part 84 fixed in the raising/lowering rod 56). In particular, by using a compression coil spring as the coil spring 86, the load applied to the base materials (W₁, W₂) upon nipping of the welding-target portion WJ by the clamp electrode 24 can be made as light as possible, so that the base materials (W₁, W₂) can be prevented from being damaged.

In the arrangement in which the torch body 40 and the raising/lowering rod 56 are attached with aid of the coil springs 82, 86 to the linear drive member 34 as described above, the linear drive member 34 can be linearly moved in oblique or horizontal directions so that the torch electrode 44 and the clamp electrode 24 can be linearly moved in the same directions.

The plate-shaped form of the linear drive member 34 in the above-described embodiments is only one example, and the linear drive member 34 may be provided in a structure of any arbitrary shape such as plate, block, cylinder or casing shape. Similarly, the coupling members 66, 68 may also be provided in any arbitrary form.

Also in the above-described embodiments, the torch 22 is attached directly to the linear drive member 34. However, as shown in Fig. 8, a linear movable member 88 such as a raising/lowering rod may be attached to the linear drive member 34 so as to be movable integrally therewith and detachable therefrom, where the torch 22 may be removably attached to a holder 90 coupled to the linear movable member 88.

The TIG welding device, although being a stationary-type in the above-described embodiments, may be mounted on a robot. In such a case, the linear drive member 34 or the raising/lowering support shaft 32 may be coupled to the robot arms.

The TIG welding machine in the above-described embodiments has automatic alignment mechanisms (X-Y stage 25, θ stage 26) provided on the stage 18 of the welding head 12. Alternatively, the stage 18 may be provided in the form of a manual-type movable stage, or the work piece or electric-component support S may be manually aligned on a stationary stage 18.

With regard to the welding-target portion WJ, the material of the terminal members W₁, W₂ is not limited to copper or copper alloy, and may be a conductor such as aluminum or aluminum alloy or brass and further the terminal member W₁ and the terminal member W₂ may be different in material from each other. The shape of the terminal members W₁, W₂ may also be any arbitrary one such as a circular-in-cross-section rod member or plate member without being limited to a rectangular-in-cross-section rod member or plate member.

### REFERENCE SIGNS LIST

- 10: device main body
- 12: welding head
- 18: movable stage
- 22: torch
- 24: clamp electrode
- 30: raising/lowering tower
- 34, 34': linear drive member
- 40: torch body
- 44: torch electrode
- 56: up/down rod
- 66,: 68 coupling member
- 70: sensor
- 80, 84: spring receiving part
- 82, 86: coil spring
- W₁, W₂: terminal members (base material)
- WJ: welding-target portion

## Claims

1. A TIG welding device (10) comprising:
a clamp electrode (24) capable of holding first and second members of base materials (W1, W2) in close contact with each other at a welding-target portion (WJ);
a clamp raising/lowering rod (56) for holding the clamp electrode (24);
a torch body (40) for holding a torch electrode (44) removably attached thereto;
a linear drive member (34) for holding the torch body (40) and the clamp raising/lowering rod (56) and for moving those members linearly in parallel with an axial direction of the torch electrode (44);
a welding power supply for supplying a current flowing within a closed circuit including the torch electrode (44) and the welding-target portion (WJ), and
a control section configured to control actuation of the linear drive member (34) and control electrical current supply;
**characterized in that**
the clamp raising/lowering rod (56) is vertically movable integrally with and detachable from the linear drive member (34), and that
the control section is configured to control actuation of the linear drive member (34) and control electrical current supply such that
while a pressurizing force is being applied to the welding-target portion (WJ) by the clamp electrode (24) and while a forward end of the torch electrode (44) is kept in contact with the welding-target portion (WJ), a voltage is applied to between the torch electrode (44) and the welding-target portion (WJ) by the welding power supply to start current supply within the closed circuit, and then, while continuing the pressurization onto the welding-target portion (WS) and the current supply within the closed circuit, the forward end of the torch electrode (44) is separated from the welding-target portion (WJ) so as to generate an arc between the torch electrode (44) and the welding-target portion (WJ), whereby the welding-target portion (WJ) is welded by heat of the arc,
wherein the control section is configured to control actuation of the linear drive member (34) such that the linear drive member (34) is linearly moved between a first position for positioning the clamp electrode (24) and the torch electrode (44) farther from the welding-target portion (WJ), a second position for positioning the clamp electrode (24) at its working position, a third position for bringing the forward end of the torch electrode (44) into contact with the welding-target portion (WJ), and a fourth position for separating the forward end of the torch electrode (44) from the welding-target portion (WJ) by a specified distance suitable for generation of the arc.

2. The TIG welding device (10) in accordance with claim 1, wherein the clamp electrode (24) includes a clamp for nipping and fixing the first and second members by electromagnetic force or air pressure or hydraulic pressure in proximity to a site of the welding-target portion (WJ) facing the torch electrode (44).

3. The TIG welding device (10) in accordance with claim 1, wherein a portion of the clamp electrode (24) to be brought into contact with the welding-target portion (WJ) has a conductor electrically connected to the welding power supply, and the conductor forms a part of the closed circuit when the current flows within the closed circuit.

4. The TIG welding device (10) in accordance with claim 1, wherein the linear drive member (34) includes a sensor (70) for detecting contact of the forward end of the torch electrode (44) on the welding-target portion (WJ) on a way of movement of the linear drive member (34) from the first position to the third position, and wherein the control section is configured to stop movement of the linear drive member (34) in response to an output signal of the sensor (70).

5. The TIG welding device (10) in accordance with claim 1, further comprising a first spring member (82) which is provided between the linear drive member (34) and the torch body (40) or a first linear movable member (88) coupled to the torch body (40) and which is elastically deformable in a moving direction of the linear drive member (34) .

6. The TIG welding device (10) in accordance with claim 1, further comprising a second spring member (86) which is provided between the linear drive member (34) and the clamp raising/lowering rod (56) coupled to the clamp electrode (24) and which is elastically deformable in the moving direction of the linear drive member (34).

7. The TIG welding device (10) in accordance with claim 1, wherein
the linear drive member (34) is configured to move linearly in a vertical direction,
a first coupling member (66) which can be coupled to and on the linear drive member (34) is fixedly or integrally formed in the torch body (40) or a first linear movable member (88) coupled to the torch body (40),
a second coupling member (68) which can be coupled to and on the linear drive member (34) is fixedly or integrally formed in the clamp raising/lowering rod (56) coupled to the clamp electrode (24),
when the linear drive member (34) is at a position higher than the second position, the clamp electrode (24) is movable up and down integrally with the linear drive member (34) while the second coupling member (68) remains mounted on the linear drive member (34), and
when the linear drive member (34) is at a position higher than the third position, the torch body (40) is movable up and down integrally with the linear drive member (34) while the first coupling member (66) remains mounted on the linear drive member (34).

8. The TIG welding device (10) in accordance with claim 1, wherein the welding power supply is adapted to control the current flowing in the closed circuit to a first current value or less while the forward end of the torch electrode (44) is in contact with the welding-target portion (WJ), and further controls the current to a second current value, or more, which is higher than the first current value after the forward end of the torch electrode (44) is separated from the welding-target portion (WJ).

9. The TIG welding device (10) in accordance with claim 8, wherein the first current value is 20A or less and the second current value is 30A or more.

10. A TIG welding method by using the TIG welding device according to any one of claims 1 to 9, the method comprising the steps of:
moving down integrally the torch body (40) and the clamp electrode (24);
clamping and holding first and second terminal members of the base materials (W1, W2) at a preset working position in close contact with each other at a welding-target portion (WJ);
lowering the torch electrode (44) further after the clamp electrode (24) clamps the first and second terminal members of the base materials (W1, W2) at the working position, and bringing a forward end of the torch electrode (44) into contact with the welding-target portion (WJ) ;
while a pressurizing force for close contact and fixation is being applied to the welding-target portion (WJ) and while the forward end of the torch electrode (44) is kept in contact with the welding-target portion (WJ), applying a voltage to between the torch electrode (44) and the welding-target portion (WJ) to start current supply within a closed circuit including the torch electrode (44) and the welding-target portion (WJ);
while continuing the pressurization onto the welding-target portion (WJ) and the current supply within the closed circuit, separating the forward end of the torch electrode (44) from the welding-target portion (WJ) to generate an arc between the torch electrode (44) and the welding-target portion (WJ), whereby the welding-target portion (WJ) is fused by heat of the arc; and
stopping the current supply within the closed circuit and thereafter cancelling the pressurization onto the welding-target portion (WJ).

## Patentansprüche

1. WIG-Schweißvorrichtung (10), umfassend:
eine Klemmelektrode (24), die in der Lage ist, erste und zweite Elemente des Grundmaterials (W1, W2) an einem Schweißzielabschnitt (WJ) in engem Kontakt miteinander zu halten;
eine klemmbare Hub-/Senkstange (56) zum Halten der Klemmelektrode (24);
einen Brennerkörper (40) zum Halten einer daran entfernbar befestigten Brennerelektrode (44);
ein Linearantriebselement (34), zum Halten des Brennerkörpers (40) und der klemmbaren Hub-/Senkstange (56) und zum Bewegen dieser Elemente linear parallel zu einer Axialrichtung der Brennerelektrode (44);
eine Schweißstromversorgung zum Zuführen eines Stroms, der innerhalb eines geschlossenen Stromkreises fließt, der die Brennerelektrode (44) und den Schweißzielabschnitt (WJ) enthält, und
einen Steuerabschnitt, der konfiguriert ist zum Steuern der Betätigung des Linearantriebselements (34) und zum Steuern der elektrischen Stromversorgung;
**dadurch gekennzeichnet, dass**
die klemmbare Hub-/Senkstange (56) einstückig senkrecht bewegbar mit dem und entfernbar von dem Linearantriebselement (34) ist, und dass
der Steuerabschnitt konfiguriert ist zum Steuern der Betätigung des Linearantriebselements (34) und zum Steuern der elektrischen Stromversorgung derart, dass,
während des Aufbringens einer Druckkraft auf den Schweißzielabschnitt (WJ) durch die Klemmelektrode (24), und während ein vorderes Ende der Brennerelektrode (44) in Kontakt mit dem Schweißzielabschnitt (WJ) gehalten wird, durch die Schweißstromversorgung eine Spannung zwischen der Brennerelektrode (44) und dem Schweißzielabschnitt (WJ) angelegt wird, um die Stromzufuhr innerhalb des geschlossenen Stromkreises zu starten, und dann, während die Druckbeaufschlagung des Schweißzielabschnitts (WS) und der Stromversorgung innerhalb des geschlossenen Stromkreises fortgesetzt werden, das vordere Ende der Brennerelektrode (44) vom Schweißzielabschnitt (WJ) getrennt wird, um einen Lichtbogen zwischen der Brennerelektrode (44) und dem Schweißzielabschnitt (WJ) zu erzeugen, wodurch der Schweißzielabschnitt (WJ) durch die Hitze des Lichtbogens geschweißt wird,
wobei der Steuerabschnitt konfiguriert ist zum Steuern der Betätigung des Linearantriebselements (34) derart, dass das Linearantriebselement (34) linear bewegt wird zwischen einer ersten Position zum Positionieren der Klemmelektrode (24) und der Brennerelektrode (44) weiter vom Schweißzielabschnitt (WJ) entfernt, einer zweiten Position zum Positionieren der Klemmelektrode (24) in ihrer Arbeitsposition, einer dritten Position zum Inkontaktbringen des vorderen Endes der Brennerelektrode (44) mit dem Schweißzielabschnitt (WJ), und einer vierten Position zum Trennen des vorderen Endes der Brennerelektrode (44) vom Schweißzielabschnitt (WJ) durch einen spezifizierten Abstand, der zur Erzeugung des Lichtbogens geeignet ist.

2. WIG-Schweißvorrichtung (10) nach Anspruch 1, wobei die Klemmelektrode (24) eine Klemme zum Klemmen und Fixieren des ersten und des zweiten Elements durch elektromagnetische Kraft oder Luftdruck oder Hydraulikdruck in der Nähe einer der Brennerelektrode (44) zugewandten Stelle des Schweißzielabschnitts (WJ) aufweist.

3. WIG-Schweißvorrichtung (10) nach Anspruch 1, wobei ein Abschnitt der Klemmelektrode (24), die mit dem Schweißzielabschnitt (WJ) in Kontakt gebracht werden soll, einen Leiter aufweist, der elektrisch mit der Schweißstromversorgung verbunden ist, und der Leiter einen Teil des geschlossenen Stromkreises bildet, wenn der Strom innerhalb des geschlossenen Stromkreises fließt.

4. WIG-Schweißvorrichtung (10) nach Anspruch 1, wobei das Linearantriebselement (34) einen Sensor (70) zum Erfassen eines Kontakts des vorderen Endes der Brennerelektrode (44) auf dem Schweißzielabschnitt (WJ) auf einem Weg der Bewegung des Linearantriebselements (34) von der ersten Position zur dritten Position aufweist, und wobei der Steuerabschnitt konfiguriert ist zum Unterbrechen der Bewegung des Linearantriebselements (34) als Reaktion auf ein Ausgangssignal des Sensors (70).

5. WIG-Schweißvorrichtung (10) nach Anspruch 1, ferner umfassend ein erstes Federelement (82), das zwischen dem Linearantriebselement (34) und dem Brennerkörper (40) oder einem mit dem Brennerkörper (40) gekoppelten ersten linear beweglichen Element (88) vorgesehen ist, und das in einer Bewegungsrichtung des Linearantriebselements (34) elastisch verformbar ist.

6. WIG-Schweißvorrichtung (10) nach Anspruch 1, ferner umfassend ein zweites Federelement (86), das vorgesehen ist zwischen dem Linearantriebselement (34) und der mit der Klemmelektrode (24) gekoppelten und in der Bewegungsrichtung des Linearantriebselements (34) elastisch verformbaren klemmbaren Hub-/Senkstange (56).

7. WIG-Schweißvorrichtung (10) nach Anspruch 1, wobei
das Linearantriebselement (34) konfiguriert ist, sich linear in einer vertikalen Richtung zu bewegen,
ein erstes Kopplungselement (66), das mit dem und an das Linearantriebselement (34) koppelbar ist, fest oder einstückig im Brennerkörper (40) ausgebildet oder ein an den Brennerkörper (40) gekoppeltes erstes linear bewegliches Element (88) ist,
ein zweites Kopplungselement (68), das mit dem und an das Linearantriebselement (34) koppelbar ist, fest oder einstückig an der klemmbaren Hub-/Senkstange (56) an die Klemmelektrode (24) gekoppelt ist,
wenn sich das Linearantriebselement (34) in einer Position befindet, die höher als die zweite Position, ist die Klemmelektrode (24) integral mit dem Linearantriebselement (34) auf und ab bewegbar ist, während das zweite Kopplungselement (68) am Linearantriebselement (34) montiert bleibt, und
wenn sich das Linearantriebselement (34) in einer Position befindet, die höher als die dritte Position ist, der Brennerkörper (40) integral mit dem Linearantriebselement (34) auf und ab bewegbar ist, während das erste Kopplungselement (66) am Linearantriebselement (34) montiert bleibt.

8. WIG-Schweißvorrichtung (10) nach Anspruch 1, wobei die Schweißstromversorgung angepasst ist zum Steuern des im geschlossenen Stromkreis fließenden Stroms auf einen ersten Stromwert oder niedriger, während das vordere Ende der Brennerelektrode (44) in Kontakt mit dem Schweißzielabschnitt (WJ) ist, und ferner zum Steuern des Stroms auf einen zweiten Stromwert oder höher, der höher als der erste Stromwert ist, nachdem das vordere Ende der Brennerelektrode (44) vom Schweißzielabschnitt (WJ) getrennt worden ist.

9. WIG-Schweißvorrichtung (10) nach Anspruch 8, wobei der erste Stromwert 20A oder weniger und der zweite Stromwert 30A oder mehr beträgt.

10. WIG-Schweißverfahren unter Anwenden der WIG-Schweißvorrichtung nach einem der Ansprüche 1 bis 9, wobei das Verfahren die folgenden Schritte umfasst:
Absenken des Brennerkörpers (40) integral mit der Klemmelektrode (24);
Klemmen und Halten eines ersten und eines zweiten Anschlusselements aus dem Basismaterial (W1, W2) in einer im Voraus einstellten Arbeitsposition in engem Kontakt miteinander an einem Schweißzielabschnitt (WJ);
weiteres Absenken der Brennerelektrode (44), nachdem die Klemmelektrode (24) die ersten und zweiten Anschlusselemente aus dem Basismaterial (W1, W2) in der Arbeitsposition klemmt, und Inkontaktbringen eines vorderen Endes einer Brennerelektrode (44) mit dem Schweißzielabschnitt (WJ);
während eine Druckkraft für engen Kontakt und Fixierung auf den Schweißzielabschnitt (WJ) ausgeübt wird, und, während das vordere Ende der Brennerelektrode (44) in Kontakt mit dem Schweißzielabschnitt (WJ) gehalten wird, Anlegen einer Spannung zwischen der Brennerelektrode (44) und dem Schweißzielabschnitt (WJ) zum Starten der Stromzufuhr innerhalb eines geschlossenen Stromkreises, der die Brennerelektrode (44) und den Schweißzielabschnitt (WJ) enthält;
während die Druckbeaufschlagung des Schweißzielabschnitts (WJ) und die Stromversorgung innerhalb des geschlossenen Stromkreises fortgesetzt werden, Trennen des vorderen Endes der Brennerelektrode (44) vom Schweißzielabschnitt (WJ), um einen Lichtbogen zwischen der Brennerelektrode (44) und dem Schweißzielabschnitt (WJ) zu erzeugen, wodurch der Schweißzielabschnitt (WJ) durch die Hitze des Lichtbogens verschmolzen wird; und
Unterbrechen der Stromzufuhr innerhalb des geschlossenen Stromkreises und danach Abbruch der Druckbeaufschlagung des Schweißzielabschnitts (WJ).

## Revendications

1. Dispositif de soudage TIG (10) comprenant :
une électrode de pince (24) en mesure de maintenir des premier et deuxième éléments de matériaux de base (W1, W2) en contact étroit l'un avec l'autre au niveau d'une portion cible de soudage (WJ) ;
une tige d'élévation/abaissement de pince (56) pour maintenir l'électrode de pince (24) ;
un corps de chalumeau (40) pour maintenir une électrode de chalumeau (44) qui est attachée à celui-ci de manière amovible ;
un élément d'entraînement linéaire (34) pour maintenir le corps de chalumeau (40) et la tige d'élévation/abaissement de pince (56) et pour déplacer ces éléments de manière linéaire parallèlement à une direction axiale de l'électrode de chalumeau (44) ;
une alimentation électrique de soudage pour fournir un courant circulant à l'intérieur d'un circuit fermé comportant l'électrode de chalumeau (44) et la portion cible de soudage (WJ), et
une section de commande configurée pour commander l'actionnement de l'élément d'entraînement linéaire (34) et commander l'alimentation en courant électrique ;
**caractérisé en ce que**
la tige d'élévation/abaissement de pince (56) est mobile verticalement d'un seul tenant avec et de manière détachable de l'élément d'entraînement linéaire (34), et **en ce que**
la section de commande est configurée pour commander l'actionnement de l'élément d'entraînement linéaire (34) et commander l'alimentation en courant électrique de sorte que
pendant qu'une force de mise sous pression est appliquée à la portion cible de soudage (WJ) par l'électrode de pince (24) et pendant qu'une extrémité avant de l'électrode de chalumeau (44) est gardée en contact avec la portion cible de soudage (WJ), une tension soit appliquée entre l'électrode de chalumeau (44) et la portion cible de soudage (WJ) par l'alimentation électrique de soudage pour commencer une alimentation en courant à l'intérieur du circuit fermé, et ensuite, tout en continuant la mise sous pression sur la portion cible de soudage (WS) et l'alimentation en courant à l'intérieur du circuit fermé, l'extrémité avant de l'électrode de chalumeau (44) soit séparée de la portion cible de soudage (WJ) de sorte à générer un arc entre l'électrode de chalumeau (44) et la portion cible de soudage (WJ), moyennant quoi la portion cible de soudage (WJ) est soudée par la chaleur de l'arc,
dans lequel la section de commande est configurée pour commander l'actionnement de l'élément d'entraînement linéaire (34) de sorte que l'élément d'entraînement linéaire (34) soit déplacé de manière linéaire entre une première position pour positionner l'électrode de pince (24) et l'électrode de chalumeau (44) plus loin de la portion cible de soudage (WJ), une deuxième position pour positionner l'électrode de pince (24) dans sa position de fonctionnement, une troisième position pour amener l'extrémité avant de l'électrode de chalumeau (44) en contact avec la portion cible de soudage (WJ), et une quatrième position pour séparer l'extrémité avant de l'électrode de chalumeau (44) de la portion cible de soudage (WJ) par une distance spécifiée appropriée la génération de l'arc.

2. Dispositif de soudage TIG (10) selon la revendication 1, dans lequel l'électrode de pince (24) comporte une pince pour pincer et fixer les premier et deuxième éléments par une force électromagnétique ou par pression atmosphérique ou par pression hydraulique à proximité d'un site de la portion cible de soudage (WJ) faisant face à l'électrode de chalumeau (44).

3. Dispositif de soudage TIG (10) selon la revendication 1, dans lequel une portion de l'électrode de pince (24) devant être amenée en contact avec la portion cible de soudage (WJ) possède un conducteur relié électriquement à l'alimentation électrique de soudage, et le conducteur forme une partie du circuit fermé lorsque le courant circule à l'intérieur du circuit fermé.

4. Dispositif de soudage TIG (10) selon la revendication 1, dans lequel l'élément d'entraînement linéaire (34) comporte un capteur (70) pour détecter un contact de l'extrémité avant de l'électrode de chalumeau (44) sur la portion cible de soudage (WJ) sur un chemin de déplacement de l'élément d'entraînement linéaire (34) depuis la première position jusqu'à la troisième position, et dans lequel la section de commande est configurée pour arrêter le déplacement de l'élément d'entraînement linéaire (34) en réponse à un signal de sortie du capteur (70).

5. Dispositif de soudage TIG (10) selon la revendication 1, comprenant en outre un premier élément de ressort (82) qui est prévu entre l'élément d'entraînement linéaire (34) et le corps de chalumeau (40) ou un premier élément linéaire mobile (88) couplé au corps de chalumeau (40) et qui est élastiquement déformable dans une direction de déplacement de l'élément d'entraînement linéaire (34).

6. Dispositif de soudage TIG (10) selon la revendication 1, comprenant en outre un deuxième élément de ressort (86) qui est prévu entre l'élément d'entraînement linéaire (34) et la tige d'élévation/abaissement de pince (56) couplée à l'électrode de pince (24) et qui est élastiquement déformable dans la direction de déplacement de l'élément d'entraînement linéaire (34).

7. Dispositif de soudage TIG (10) selon la revendication 1, dans lequel
l'élément d'entraînement linéaire (34) est configuré pour se déplacer de manière linéaire dans une direction verticale,
un premier élément de couplage (66) qui peut être couplé à et sur l'élément d'entraînement linéaire (34) est formé fixement ou d'un seul tenant dans le corps de chalumeau (40) ou un premier élément linéaire mobile (88) couplé au corps de chalumeau (40),
un deuxième élément de couplage (68) qui peut être couplé à et sur l'élément d'entraînement linéaire (34) est formé fixement ou d'un seul tenant dans la tige d'élévation/abaissement de pince (56) couplée à l'électrode de pince (24),
lorsque l'élément d'entraînement linéaire (34) se trouve à une position plus haute que la deuxième position, l'électrode de pince (24) est mobile de haut en bas d'un seul tenant avec l'élément d'entraînement linéaire (34) pendant que le deuxième élément de couplage (68) reste monté sur l'élément d'entraînement linéaire (34), et
lorsque l'élément d'entraînement linéaire (34) se trouve à une position plus haute que la troisième position, le corps de chalumeau (40) est mobile de haut en bas d'un seul tenant avec l'élément d'entraînement linéaire (34) pendant que le premier élément de couplage (66) reste monté sur l'élément d'entraînement linéaire (34).

8. Dispositif de soudage TIG (10) selon la revendication 1, dans lequel l'alimentation électrique de soudage est adaptée pour commander le courant circulant dans le circuit fermé pour qu'il soit inférieur ou égal à une première valeur de courant pendant que l'extrémité avant de l'électrode de chalumeau (44) est en contact avec la portion cible de soudage (WJ), et commande encore le courant pour qu'il soit supérieur ou égal à une deuxième valeur de courant, qui est plus haute que la première valeur de courant après que l'extrémité avant de l'électrode de chalumeau (44) se soit séparée de la portion cible de soudage (WJ).

9. Dispositif de soudage TIG (10) selon la revendication 8, dans lequel la première valeur de courant est de 20 A ou moins et la deuxième valeur de courant est de 30 A ou plus.

10. Procédé de soudage TIG en utilisant le dispositif de soudage TIG (10) selon l'une quelconque des revendications 1 à 9, le procédé comprenant les étapes consistant à :
déplacer vers le bas le corps de chalumeau (40) et l'électrode de pince (24) d'un seul tenant ;
serrer et maintenir des premier et deuxième éléments de borne des matériaux de base (W1, W2) à une position prédéfinie de fonctionnement en contact étroit l'un avec l'autre au niveau d'une portion cible de soudage (WJ) ;
abaisser encore l'électrode de chalumeau (44) après que l'électrode de pince (24) a serré les premier et deuxième éléments de borne des matériaux de base (W1, W2) à la position de fonctionnement, et amener une extrémité avant de l'électrode de chalumeau (44) en contact avec la portion cible de soudage (WJ) ;
pendant qu'une force de mise sous pression pour un contact et une fixation étroits est appliquée à la portion cible de soudage (WJ) et pendant que l'extrémité avant de l'électrode de chalumeau (44) est gardée en contact avec la portion cible de soudage (WJ), appliquer une tension entre l'électrode de chalumeau (44) et la portion cible de soudage (WJ) pour commencer une alimentation en courant à l'intérieur d'un circuit fermé comportant l'électrode de chalumeau (44) et la portion cible de soudage (WJ) ;
tout en continuant la mise sous pression sur la portion cible de soudage (WJ) et l'alimentation en courant à l'intérieur du circuit fermé, séparer l'extrémité avant de l'électrode de chalumeau (44) de la portion cible de soudage (WJ) pour générer un arc entre l'électrode de chalumeau (44) et la portion cible de soudage (WJ), moyennant quoi la portion cible de soudage (WJ) est fusionnée par la chaleur de l'arc ; et
arrêter l'alimentation en courant à l'intérieur du circuit fermé et par la suite à annuler la mise sous pression sur la portion cible de soudage (WJ).
